Europäisches Patentamt

European Patent Office

Office européen des brevets

(19)

(11) **EP 1 205 492 A1**

(12) **EUROPEAN PATENT APPLICATION**

(43) Date of publication:
**15.05.2002 Bulletin 2002/20**

(51) Int Cl.[7]: **C08F 2/22**, C08F 2/38

(21) Application number: **00124404.5**

(22) Date of filing: **08.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Butté, Alessandro**<br>  **8005 Zürich (CH)**<br>• **Storti, Giuseppe**<br>  **26900 Lodi (IT)**<br>• **Morbidelli, Massimo**<br>  **8006 Zürich (CH)** |
| (71) Applicant: **ETHZ,**<br>**Laboratorium für Technische Chemie LTC**<br>**8092 Zürich (CH)** | (74) Representative: **Troesch Scheidegger Werner AG**<br>**Schwäntenmos 14**<br>**8126 Zumikon (CH)** |

(54) **Process for producing homo- and co-polymers by RAFT miniemulsion polymerization**

(57) A novel process to produce homo- and co-polymers by RAFT polymerization in miniemulsion is here disclosed. The invention mixes to different existing technologies: miniemulsion and living free radical polymerization by RAFT. Miniemulsion provides the necessary radical segregation in order to reduce bimolecular terminations and to increase the polymerization rate. Moreover, since in miniemulsion oil droplets are directly nucleated, the transfer agent necessary to the RAFT process is already present at the beginning of the polymerization in the polymerization loci. The presence of the transfer agent assures the living mechanism, *i.e.* chains grow through the entire process in a highly controlled way. This generally leads to the production of low polydispersity polymers. It is worth noting that, since the RAFT reaction does not affect the radical concentration in the particle, the same polymerization rate as in a conventional polymerization process is obtained. Moreover, since polymer chains are still living at the end of the process, they can be restarted thus producing block copolymers.

EP 1 205 492 A1

## Description

## Field of the Invention

This invention generally relates to a method for the formation of polymers in heterogeneous systems, and more particularly to process for producing homo- and co-polymers by RAFT miniemulsion polymerization.

## Background of the Invention

Homogeneous free-radical polymerization (FRP) is a very important commercial process for preparing high molecular weight polymers. By this process are in fact produced polymers of large consumption, such as e.g. polystyrene and different types of polyacrylates and polymethacrylates. The major advantage of this technique is represented by the mild reaction condition required. FRP, even if requires absence of oxygen, is in fact tolerant to many impurities such as water and can operate on a large temperature range (-20 to 200°C). However, it suffers of two lacks. First, because of the nature of the process which involves radicals, the life time of a radical polymer chain is short, due to radical recombination. Since the final length of the chain is related to its lifetime, this force to deal with very low radical concentrations and, thus, with small polymerization rates. This problem may be overcome moving the process in a heterogeneous system, *e.g.* emulsion, where radical chains are segregated into particles and then much larger molecular weights and polymerization rates can be obtained at the same time. The use of emulsion can also eliminate every problem related to medium viscosity and heat transfer rate, which on the contrary represent the second main drawback of bulk polymerization.

Part of the success of FRP is also due to the possibility of producing large varieties of alternating or random copolymers. These polymers are interesting since they behave as an homo-polymer the properties of which are weighted on the properties of the single components. However, when a chemical blend of two polymers, still conserving their main peculiarities, is needed, block copolymers represent the best choice. Block copolymers are generally produced by living polymerization. It is in fact fundamental the capability of the polymer chain to restart when in presence of a second monomer. This possibility has been precluded in FRP for a long time, since when Moad in 1980 found a way to perform a living FRP, or LFRP. This has opened the possibility of producing block copolymers by a free-radical process, but also to increase the control on the polymer microstructure, which represents a further peculiar characteristic of living processes. Only recently (Bon et al., *Macromolecules*, **1997**, 30, 324), first attempts to perform a LFRP in a heterogeneous system have appeared in literature. The goal is to join all together the flexibility of FRP, the large productivity of emulsion and the control of living systems.

It is therefore an object of the present invention to provide for a tool to produce polymers by living free radical polymerization at a high rate.

A further object of the invention is to provide for a tool to produce a broad range of homo-polymers types by living free radical polymerization with controlled microstructure, e.g. star polymers or polymers with small polydispersity values of the molecular weight distribution.

A further object of the invention is to provide for a tool to produce a large variety of block co-polymers by living free radical polymerization.

A further object of the invention is to provide for a tool to produce polymers by living free radical polymerization at mild temperature conditions (e.g. 40 to 100°C).

A final object of the invention is to provide for a tool to produce polymers by living free radical polymerization which guarantees all the typical advantages of the emulsion polymerization, *i.e.* low medium viscosity, large heat transfer rates and, most of all, large polymerization rates.

Other objects and advantages of the present invention will become apparent from the following descriptions, taken in connection with the accompanying drawings, wherein, by way of illustration and example, an embodiment of the present invention is disclosed.

The solution for all the above mentioned objects has surprisingly and successfully been found by combining two existing technologies: living free radical polymerization by reversible addition-fragmentation transfer (RAFT) and miniemulsion polymerization. LFRP represents a well-developed technique to produces polymer in homogeneous systems (bulk and solution). Two are the main typical applications of LFRP: (i) production of highly controlled polymer microstructures and (ii) synthesis of block copolymers. With regard to the first point, of particular interest is the ability of LFRP of producing polymers with very narrow distributions, *i. e.* with polydispersity values close to 1. In fact, the basic principle of LFRP consists in introducing in the reacting system a species able to trap the propagating chains in a reversible non-propagating species, or dormant chain. The presence of the dormant chains in the system forces every chain to undergo through a series of regularly alternating periods where the chain is either active or dormant. During each active period, the chain has the possibility of adding only a limited number of monomer units before being trapped again. Therefore, the result of a fast exchange between the active and the dormant chains guarantees the same average rate of monomer addition along the entire process for every chain. If, at the same time, the probability of bimolecular termination of the radical chains is somehow reduced so that the global amount of dead chains is negligible with respect to the number of dormant chains, the polymer chains can live during the whole process and grow with a remarkable uniformity in the chain length. It is worth noting that the polymer recovered at the end of the reaction is generally still bonded to the trapping agent. Accordingly, if this polymer is dissolved in the same or in a different monomer, it starts growing again with living mechanism. This unique feature can be used to produce great varieties of block copolymers.

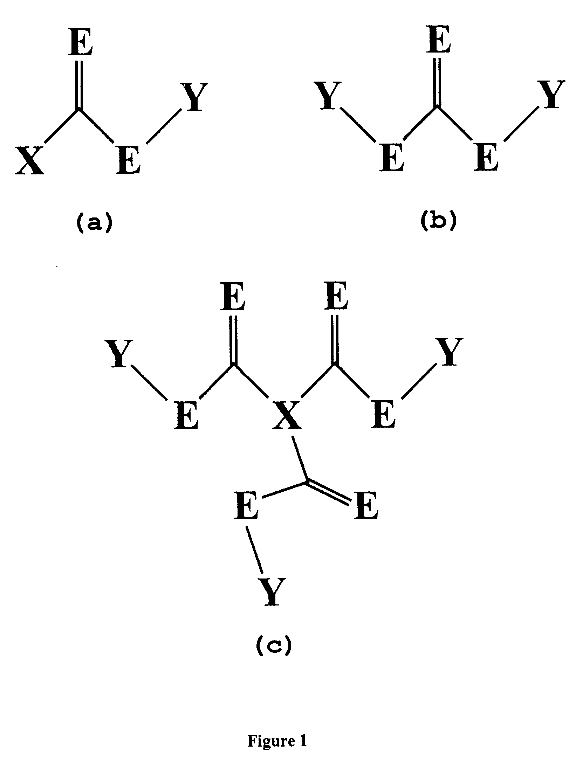

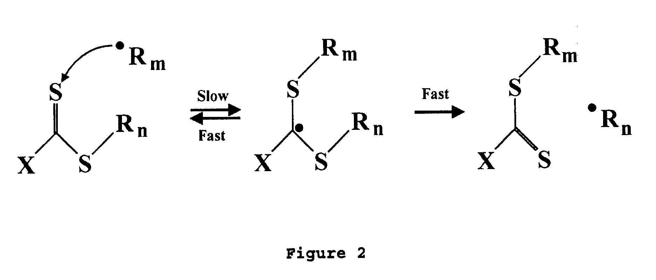

Several different "living" systems such as nitroxide-mediated living polymerization (NMLP), atom transfer radical polymerization (ATRP), degenerative transfer (DT) or reversible addition-fragmentation transfer (RAFT) polymerization have been tested extensively under homogeneous conditions. They differ from each other both in the form of the exchange reaction between active and dormant state and in the species used to trap the active chains. Among these mechanisms, RAFT has distinguished itself for the flexibility it offers in terms of monomers types which can be polymerized by this technique, and in terms of favorable reaction conditions required, especially with regard to temperature (50 to 100°C) (Chong et al., *Macromolecules*, **1999**, 32, 2071; Mayadunne et al., *Macromolecules*, **1999**, 32, 6977). The kinetics of the RAFT reaction is reported in Figure 2. It can be seen that molecules responsible for the chain trapping are directly transferred from a dormant to an active chain. Accordingly, this reaction is referred to as transfer reaction and the trapping species are transfer agent. Possible configurations for transfer agents are reported in Figure 1. The E groups are generally represented by a sulphur atom and, thus, the transfer agent can be indentified as a dithio-ester. The Y group is generally represented by a polymer chain, during the reaction, or by a whatever molecule, such as -C(CH$_3$)$_2$CN, at the beginning of the process. Finally, the X group does not directly participate to the transfer reaction but it largely affects its kinetics.

By miniemulsion polymerization (Miller et al., *Macromolecules*, **1995**, 28, 2754; Reimers et al., *J. Appl. Polym. Sci.*, **1996**, 59, 1833), it is possible to carry out a polymerization in a heterogeneous system using monomer droplets as main loci of polymerization. Emulsions can degrade principally by two means: coalescence and diffusional degradation (or Ostwald ripening). Coalescence can be precluded by the use of a suitable surfactant, while diffusional degradation by the addition of a hydrophobe to the oil phase. This species can reduce the total Gibbs free energy of the particle, thus decreasing the driving force for the diffusion. As a consequence, these droplets remain stable for unusually long periods of time, i.e. long enough to allow nucleation to occur. In other word, this system is kinetically stable. Miniemulsion droplets are typically in the range of 50 to 500 nm and are produced by impressing to the system high shear rates. This results in a large droplet surface area, which has a twofold effect: (1) the probability of droplet nucleation is enhanced and (2) there is only little free surfactant in the water phase available for micellar or homogeneous nucleation, thus making miniemulsion droplets the main loci of nucleation. The effect on the overall kinetics is significant, even if miniemulsion still resemble a classical emulsion polymerization. In miniemulsion there is no stage I and II, as described by the Swith-Ewart kinetics, and polymerization starts directly from stage III. Monomer is in fact stored since the beginning of the process in the droplets, *i.e.* in the polymer particle after the nucleation step. This is also due to the swelling capability of the hydrophobe, which enables the polymer particle to absorb many times their swelling capacity in monomer.

Surprisingly it has been found that a proper combination of this two pre-existing technologies can be carried out while preserving at the same time the original features and advantages of each single technology. That is, the resulting process should exhibit a kinetics similar to that of miniemulsion and polymerization should be living at the same time. Different attempts to obtain these results have appeared in the literature. RAFT polymerization has been carried out in conventional (ab-initio) emulsion polymerization (Uzulina et al., *Macromol. Symp.*, **2000**, 150, 33; Charmot et al., *Macromol. Symp.*, **2000**, 150, 23; Moad et al., *Polym. Int.*, **2000**, 49, 993). Many other attempts to bring LFRP in emulsion have been done with different living mechanisms: two different research groups (Lansalot et al., *Macromolecules*, **1999**, 32, 7354; Butté et al., *Macromolecules*, **2000**, 33, 3485) have used miniemulsion polymerization in combination with LFRP by degenerative transfer; few papers have appeared about miniemulsion polymerization by NMLP (Bon et al., *Macromolecules*, **1997**, 30, 324; Marestin et al., *Macromolecules*, **1998**, 31, 4041; Prodpran et al., *Macromol. Symp.*, **2000**, 155, 1) and, finally, a paper has appeared on emulsion ATRP (Gaynor et al., *Macromolecules*, **1998**, 31, 5951).

The shortcomings in prior technology with respect to the invention proposed here are rather evident. On one hand, LFRP in homogeneous system, and thus also RAFT polymerization, requires large reaction times in order to keep the system close to a living polymerization. The final number of dead chains by bimolecular termination is in fact proportional to the polymerization rate. Accordingly, small active chain concentrations are required. On the other hand, miniemulsion polymerization itself does not provide any control on the microstructure of the final product. Classical emulsion systems are in fact non-living process. This means that low polydispersity polymers and block copolymers cannot be produced by this technique.

The comparison with other living polymerization, such as anionic or cationic polymerization, is not discussed here.

Ionic polymerizations are in fact superior when looking at control capabilities on the polymer microstructure. In spite of this, radical polymerization is still superior in many different aspects, such as the flexibility of the process.

Differences with the other techniques used to carry out a LFRP in a heterogeneous system are subtler. Let us first analyze the case of the miniemulsion LFRP by degenerative transfer proposed by Lansalot et al. (*Macromolecules*, **1999**, 32, 7354) and by Butte' et al. (*Macromolecules*, **2000**, 33, 3485). This kind of polymerization exhibits the same kinetics as RAFT, both in homogeneous and heterogeneous systems, since both RAFT and DT do not alter the active chain concentration in the system. Moreover, even if the chemistry of the exchange reaction between active and dormant state is different, this does not influence this final result. The main difference must be found in the chemical structure of the transfer agent used, represented by an iodine atom in degenerative transfer and by a dithio-ester group in RAFT. The effect is twofold: (1) the exchange reaction rate is faster in RAFT, leading to a more homogeneous growth of the polymer and, thus, to smaller polydispersity values, and (2) RAFT can be in principle applied to a wide range of monomers (and therefore to production of copolymers) while the applicability of DT is mainly restricted to styrene-like monomers.

Different research groups (Uzulina et al., *Macromol. Symp.,* **2000**, 150, 33; Charmot et al., *Macromol. Symp.*, **2000**, 150, 23; Moad et al., *Polym. Int.*, **2000**, 49, 993) have applied RAFT to a conventional ab-initio emulsion polymerization.

Ab-initio emulsion polymerization and miniemulsion polymerization are very different when applied to a living system. In miniemulsion, the main loci of radical nucleation (i.e. generation of a new polymer particle by entry of an oligomeric radical formed in the aqueous phase) are the oil droplets, which already contain the transfer agent needed to establish living polymerization by RAFT. On the other hand, in a classical emulsion polymerization, nucleation can occur by entry into micelles or by precipitation (homogeneous nucleation). In both cases, a new particle without transfer agent is formed. This has two main consequences: (1) initially the polymerization in these particles is non-living and (2) the transfer agent has to diffuse from the monomer droplets through the water phase to the polymer particles. Of course, the presence of a flux of transfer agent to the existing particles together with a period where the particles are formed always lead to a non-homogeneous partitioning of the transfer agent among the particles. In other words, firstly formed particles will receive a larger number of transfer agent molecules than the last formed ones, thus leading to differences in the final molecular weight and, more generally, in the final polymer microstructure among the particles. Moreover, as reported by Lansalot et al. (*Macromolecules*, **1999**, 32, 7354), the transfer agent could be so water-insoluble that the diffusion to the polymer particle is very slow and not complete even when the monomer depletion is complete. This introduces and additional disturb to the uniformity of the polymer growth. Moreover, in case of formation of a block copolymer, when a second monomer is added it will likely swell the transfer agent droplets, thus forming a homopolymer.

LFRP has also been applied to emulsion using different living mechanisms: with TEMPO (Bon et al., *Macromolecules*, **1997**, 30, 324; Marestin et al., *Macromolecules*, **1998**, 31, 4041; Prodpran et al., *Macromol. Symp.*, **2000**, 155, 1) and by ATRP. However, these mechanisms exhibit completely different kinetics when applied to emulsion, resulting in polymerization rates similar to the corresponding bulk case, as shown theoretically by Butté et al. (in preparation) and experimentally by Prodpran et al. Accordingly, the polymerization rates are very small, leading to very poor productivities. Moreover, while NMLP is generally applied only to styrene-like monomers and requires large temperatures (larger than 100°C, thus forcing to operate under pressure to avoid boiling of water), ATRP introduces metal compounds which make the final product not suitable for many applications.

As a consequence the following method of forming polymer by living free radical polymerization in miniemulsion is disclosed. The method comprises: (a) forming a miniemulsion including (i) an aqueous solution and (ii) a non-aqueous solution including at least a monomer and a so-called transfer agent able to undergo to reversible addition-fragmentation transfer (RAFT) reaction, and (b) reacting the miniemulsion in the presence of an initiator for a time sufficient to form the polymer. The resulting polymer is generally characterized by a controlled microstructure, e.g. with low polydispersity values of the molecular weight distribution. The method may also comprise addition of monomer, water or surfactant during the polymerization (semi-batch process) and the addition of another monomer to system in order to produce a block copolymer.

As miniemulsion in the present invention is understood a dispersion of monomer droplets in water which remains stable for a time long enough to start the polymerization reaction. This could be e.g. a dispersion with droplet sizes in the range of 1 to 1000 nm, preferably 1 to 500 nm or even more preferably of 1 to 200 nm.

The drawings constitute a part of this specification and include exemplary embodiments to the invention, which may be embodied in various forms. It is to be understood that in some instances various aspects of the invention may be shown exaggerated or enlarged to facilitate an understanding of the invention.

**Brief Description of the Drawings**

- **Figure 1 -** General structures of the transfer agents which may be used to start the reversible addition-fragmentation transfer reaction: (a) transfer agent used for the production of homo- and AB copolymers; (b) transfer agent used for the production of ABA copolymers and (c) transfer agent used for the production of star polymers.

- **Figure 2** - Mechanisms of the reversible addition-fragmentation transfer reaction.

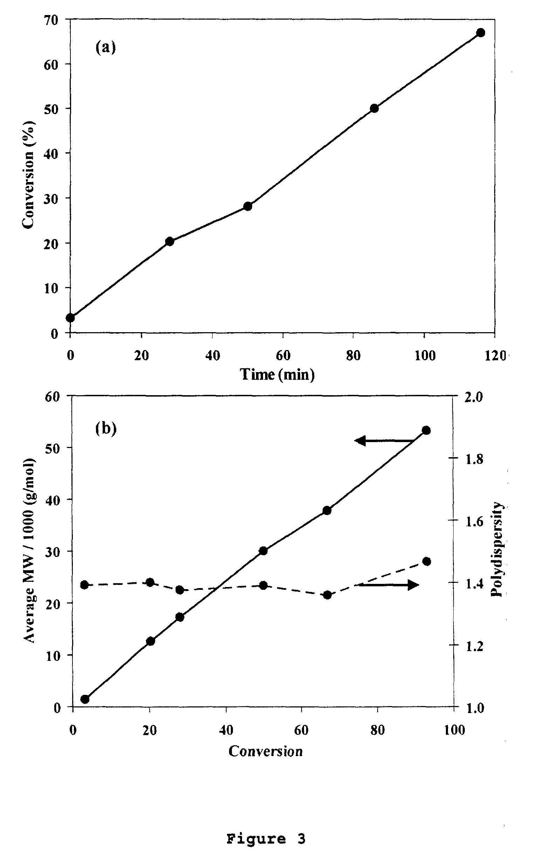

- **Figure 3 -** (a) Conversion vs. time and (b) average molecular weight and polydispersity vs. conversion plots for a styrene miniemulsion LFRP by RAFT.

- **Figure 4** - Measured normalized molecular weight distribution for the styrene miniemulsion LFRP by RAFT. Numbers refer to the respective measured conversion values.

- **Figure 5** - (a) Conversion vs. time and (b) average molecular weight and polydispersity vs. conversion plots for a methyl methacrylate miniemulsion LFRP by RAFT.

- **Figure 6** - Measured normalized molecular weight distribution for the MMA/STY block co-polymerization in miniemulsion. Numbers refers to the measured conversion values.

- **Figure 7 -** (a) Average molecular weight and polydispersity vs. conversion and (b) measured molecular weight distribution plots for a STY/BA block co-polymerization in miniemulsion. Numbers refers to the measured conversion values.

## Detailed Description of the Preferred Embodiments

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

Miniemulsion polymerization provides for a tool to carry out a polymerization in a heterogeneous system where the active chain are segregated and the preferred loci of nucleation is represented by the oil droplets. The general recipe for a miniemulsion is made of an oil-phase, comprising monomer and a hydrophobe, and a water-phase, comprising a water solution of a surfactant. Miniemulsion droplet can in fact degrade by means of two processes: coalescence and diffusional degradation. The first process may be prevented by the presence of the surfactant agent on the particle surface, while the second by the presence of the hydrophobe, which decreases the total Gibb energy of the particle thus reducing the driving force for the diffusion of the monomer out of the particle. The surfactant agent may be selected from anionic, cationic or non-ionic surfactant or a mixture of them. The hydrophobe may comprise a polymer chain, a long chain alkane (e.g. hexadecane) or a fatty alcohol (e.g. cetyl alcohol) or a mixture of them. Accordingly, kinetically stable small miniemulsion droplets can be obtained by impressing to the system a high mixing followed by a very large shear rates. Thus, the system is stable in this configuration for a period long enough to start the polymerization. It is worth noting that the kind of device used to impress the shear rate to the system influences the process only in the measure of its capability of producing small mini-emulsion particles. Preferred miniemulsion droplet size is in fact 50 to 500 nm. Typical miniemulsion droplet sizes are from 1 to 1000 nm, preferably 1 to 500 nm. Even more preferred miniemulsion droplet sizes in fact are 50 to 500 nm. In general within the present invention as miniemulsion is understood a dispersion of monomer droplets in water, which remains stable for a time long enough to start the polymerization reaction.

The consequence is twofold. Firstly, this increases the total droplet surface area and reduces the surfactant concentration in the water phase well below the critical micellar concentration. Accordingly, direct droplet nucleation is statistically predominant, while micellar and homogeneous nucleation are largely reduced or even prevented. Secondly, it affects the global kinetics of the polymerization. Stages I and II, as described by the classical Smith-Ewart kinetics, are skipped and the polymerization directly starts from stage III, where there is a decrease in the monomer concentration similar to bulk polymerization. In spite of this, the miniemulsion kinetics still resembles the classical emulsion kinetics. Because of the small dimensions of the polymer particles, active polymer chains are still segregated. Accordingly, the polymerization kinetics is generally regulated by the entry rate. When a radical enters a polymer particle, it has an average time $1/\rho$ to disposal for propagation, where $\rho$ represents the frequency of radical entry. This is much larger than in a bulk polymerization, where the time to disposal for propagation is instead regulated by the frequency of termination. As soon as a second radical enters the particle, an almost immediate bimolecular combination takes place, bringing the particle to a state with no active chain. As a result, the average number of active chains in particle approaches the value of 0.5, which is again much larger than in a homogeneous polymerization, independently by the value of $\rho$. These conditions are ideal for a living free radical polymerization (LFRP), where the reduction of the final number of dead chain is essential in order to keep the process close to true living conditions.

The basic principle of LFRP consists in introducing in the reacting system a species able to trap reversibly the propagating, or active, chains into a reversible non-propagating specie, or dormant chain. The presence of these chains forces every chain to undergo through a series of regularly alternating periods where the chain is either active or dormant. During each active period, the chain has the possibility of adding only a limited number of monomer units before being trapped again. Accordingly, a fast exchange between active and dormant state is essential in order to guarantee a similar rate of monomer addition for every chain along the entire process. If, at the same time, the probability of termination is somehow reduced so that the final number of dead chains is negligible with respect to the dormant, the polymer chains can live during the whole process and grow with a remarkable uniformity in the chain length. Among the different mechanism by which a LFRP can be carried out, LFRP by reversible addition-fragmentation reaction (RAFT) is the one that best exploits. In LFRP by RAFT, the species responsible to trap the growing chain is represented by a group, as shown in Figure 1, which could be e.g. a dithio-ester group if the element, designated with the letter E is sulfur (S). The general kinetics of the reaction allowing the transfer of the trapping molecule, a transfer agent, from a dormant to an active chain in instead reported in Figure 2. Note that the kinetics of the RAFT reaction can be expressed as:

$$R_n - TA + R_m^\bullet \xrightarrow{k_{ex}} R_m - TA + R_n^\bullet \,,$$

where TA represents the transfer agent. By this representation, only the effective transfer reactions are accounted for. It can be seen that the active chain concentration in the system is not affected. Accordingly, when applied to emulsion the same kinetics as a conventional miniemulsion polymerization, *i.e.* a non-living polymerization, is obtained. Moreover, the effective rate of transfer, $k_{ex}$, provides a totally independent parameter to be tuned in order to make the exchange between the active and the dormant state faster and, thus, to better homogenize the growth of the polymer chains. The living mechanism can be easily started adding the transfer agents illustrated in Figure 1 to the oil phase at the beginning of the process. It is worth noting that the transfer agent may comprise an aliphatic or a polymer group. Moreover, the initial transfer agent added to the oil phase may assume the role of hydrophobes itself, thus stabilizing the miniemulsion droplets. Accordingly, the addition of any other hydrophobe is not strictly necessary. Finally, the initial monomer to dormant chain molar ratio returns the average number of monomer units added by each chain, thus providing an additional parameter to control the polymerization.

Summarizing, the polymerization can be fully controlled acting on four different independent parameters: the particle size, the frequency of entry, the exchange reaction rate of the RAFT reaction and the initial monomer to dormant chain ratio. The particle size affects the polymerization rate, since the active chain concentration in particle is $\bar{i}/N_A V_p$, where $\bar{i}$ represents the average number of active chains in particle, $N_A$ the Avogadro's constant and $V_p$ the particle volume. The frequency of entry affects the final number of dead chains by bimolecular combination. Accordingly, to minimize the dead chains is necessary to reduce the frequency of radical entry from the water phase and to increase the polymerization rate, thus decreasing $V_p$. The exchange reaction rate of the RAFT reaction affects the final polydispersity of the process. The faster is the exchange between active and dormant chain, the large is the number of active periods each chain experiences, thus leading to a better uniformity of the final molecular weight distribution. Finally, the initial number of dormant chains added to the system controls the final average degree of polymerization. The same applies when producing a copolymer. Since the dormant chains at the end of the polymerization are still bonded to the trapping molecule, if another monomer is dissolved into the particles, the reaction simply restarts and a block copolymer is formed. The ratio between the moles of dormant chains in the system and the moles of monomer added returns the average degree of polymerization of the second block of the copolymer. Finally it is worth noting that the chemical structure of the transfer agents used to start the RAFT reaction directly affects the final microstructure of the polymer, as shown in Figure 1. The transfer agent denoted as (a) can be used to produce linear polymers, while the one denoted as (c) to produce star polymers. Instead, the transfer agent denoted as (b) can be used to produce ABA copolymers, where the central B block is firstly formed.

The element designated with the letter "E" preferably is sulphur, so that the species responsible to trap the growing chain is represented by a dithio ester group. But of course the present invention is not restricted to sulphur as the element "E", as other elements, such as oxygen, selenium etc. may be used to form the responsible group. In general one could say that all elements in class 6 of the periodic system of the elements are suitable, which behave like sulphur. Finally, also groups such as $CH_2$ or NH may be suitable to represent the element "E" in Fig. 1.

The important fact is, that there is existing a saturated and an unsaturated bonding to be shifted between the central carbon and the two elements, designated with the letter "E", as shown in Fig. 1 and Fig. 2.

In the following, few examples of miniemulsion LFRP by RAFT are shown. These examples are proposed in order to demonstrate that by using miniemulsion together with dormant chains to start the RAFT reaction it is possible to obtain different homo-polymers and copolymers with polymerization rates comparable to those of a classical emulsion process.

Example no. 1: styrene (STY) miniemulsion LFRP by RAFT

The reaction has been prepared according to the following recipe:

- Styrene         30 g

- Hexadecane         1.25 g

- Dormant chains (incl. transfer agent)         0.85 g

- Distilled water (solution with initiator)         179 g

- Sodium dodecyl sulphate (surfactant)         0.5 g

- Potassium persulphate (initiator)         0.04 g

- Sodium bicarbonate (buffer agent)         0.0125 g

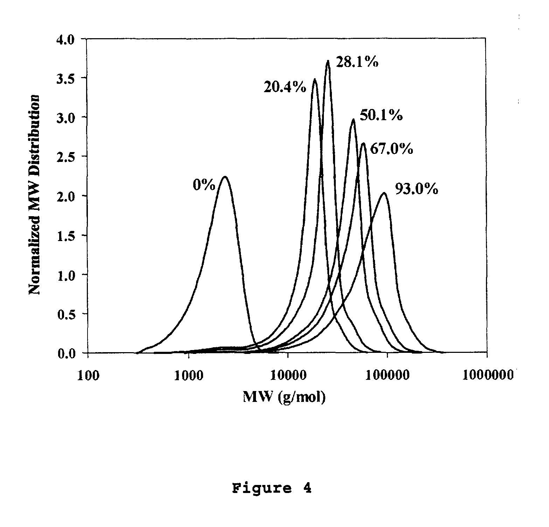

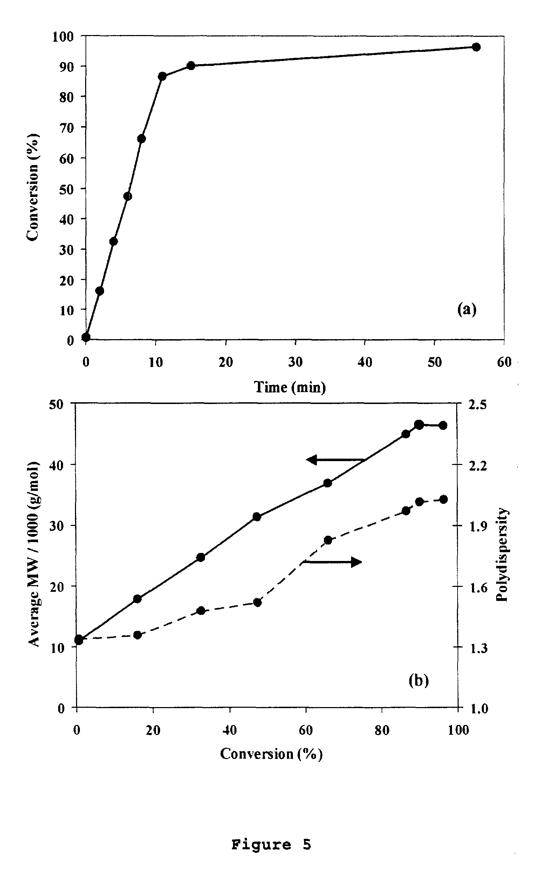

Dormant chains are given as a pre-made living polymer ($M_n$ = 1,470 g/mol, $P_d$ = 1.39) where the X and Y groups are pyrrole and PSTY, respectively. Styrene, hexadecane and dormant chains were added to the water phase (water and SDS) under vigorous agitation. This suspension was passed 10 times in a microfluidizer (Microfluidics® , model 110-Y) with an inlet pressure of about 2,500 psi. The system was purged with nitrogen under agitation and the temperature has been raised to 80°C. At this point, a solution of KPS and sodium bicarbonate was added to start the polymerization. After 2 hours the polymerization was stopped and, as shown in Figure 4a, the system reached 70% conversion and the final average particle diameter was 133 nm. Conversion is evaluated gravimetrically, while particle size by dynamic laser light scattering (Marvern Zetasizer 5000). Samples were taken by means of a syringe and directly used for every measurment (conversion, MWD and particle size). As shown in Figure 4b, the average molecular weight increased almost linearly and the polydispersity value of the polymer was always below 1.5. In Figure 5, the normalized molecular weight distribution measured at different conversion values is reported, thus confirming the living nature of the process. All the molecular weight distribution (MWD) data are obtained by a GPC apparatus equipped with 3 columns (Polymer Laboratories, Plgel 5μ Mixed-C). Tetrahydrofuran (1 ml/min at 40°C) is used a eluent. It is worth noting that no polymer with large molecular weight was detected, *i.e.* polymer having the typical dimension range of a non-living emulsion polymerization. This confirms that all the initial miniemulsion droplets have been nucleated and no particles have been created by micellar or homogeneous mechanisms.

Example no. 2: methyl methacrylate (MMA) miniemulsion LFRP by RAFT

The reaction has been prepared according to the following recipe:

- Methyl methacrylate         23.7 g

- Hexadecane         0.65 g

- Dormant chains         5.6 g

- Distilled water         175+4 g

- Sodium dodecyl sulphate         0.5 g

- Potassium persulphate         0.03 g

- Sodium bicarbonate         0.01 g

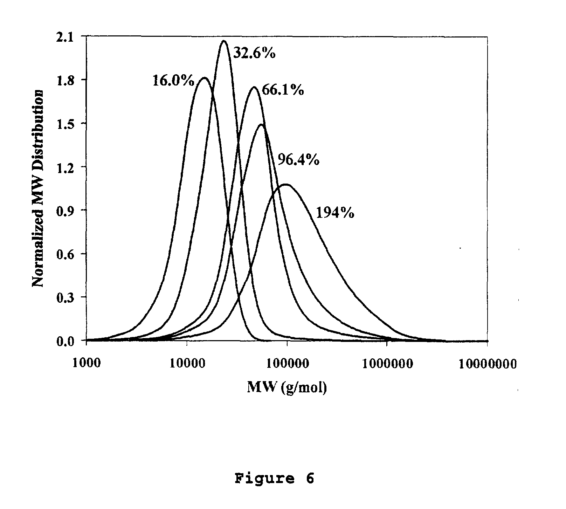

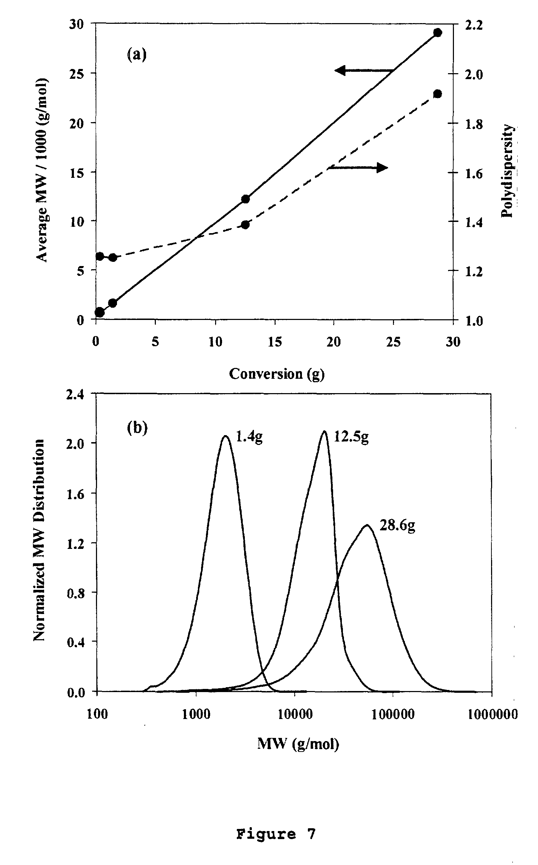

Dormant chains are given as a pre-made living polymer ($M_n$ = 10,340 g/mol, $P_d$ = 1.34) where the X and Y groups are pyrrole and PMMA, respectively. The preparation of the miniemulsion is as described in Example 1, with the exception of the reaction temperature, set to 65°C. The results of this polymerization are shown in Figure 6. It can be observed that the reaction is almost complete in about 15 minutes and that the average molecular weight of the polymer, $M_n$, increases linearly, confirming the living nature of the polymerization. This in spite of the large polydispersity values obtained (about 2.05). These are likely due to a small fraction of homogeneously nucleated particles, the presence of which can be deduced by the increasing tail in the large molecular weight portion of the MWD, as shown in Figure 7. However, from this figure comes a further confirm of the living nature of the process. It is in fact possible to observe that the polymer peak clearly shifts from small to large molecular weights. Note that the average particle diameter is the end of the process was about 85 nm.

Example no. 3: PMMA-PSTY block copolymer by miniemulsion LFRP by RAFT

About 12 grams of styrene are added to the miniemulsion described in Example 2. Before starting the reaction, the system was kept at 50°C in an atmosphere of air for 1 hour, to let the monomer swelling the PMMA particles. After this, the system was purged with nitrogen and the temperature was raised to 75°C. No additional KPS was added. The polymerization has reached almost complete conversion in about 20 minutes. The result of the polymerization is shown in Figure 7, where the MWD curve at 198% conversion indicate the block copolymer PMMA-PSTY ($M_n$ = 82,700 g/mol, $P_d$ = 3.09). In spite of the rather large polydispersity value obtained, it can be seen that the polymer peak corresponding to the homo-polymer (PMMA) is disappeared. This means that almost all the PMMA dormant chains restarted to form the block copolymer.

Example no. 4: STY-butyl acrylate (BA) block copolymer by miniemulsion LFRP by RAFT

The reaction has been prepared according to the following recipe:

- Styrene        20 g

- Hexadecane        1.5 g

- Dormant chains        0.2375 g

- Distilled water        170 g

- Sodium dodecyl sulphate        0.7 g

- Toluene        10 g

- Potassium persulphate        0.065 g

- Sodium bicarbonate        0.02 g

Dormant chains are given as a transfer agent where the X and Y groups are pyrrole and styrene, respectively. The preparation of the miniemulsion is as described in Example 1, with the exception of the reaction temperature, set to 70°C. After 3 hours of polymerization, 9.2 grams of BA have been added to the system by a syringe. The results of this polymerization are shown in Figure 8. Even if polydispersity values are rather large also in this case, the continuous growth of the average molecular weight and the clear shift of the polymer peak in the MWD are a clear proof of the living nature of the polymerization. It is worth noting that BA may give a large number of branches, which contributes to increase the polydispersity. However, it also interesting to note that, differently from other BA non-living emulsion polymerization, the formation of a gel phase was not appreciably observed.

While the invention has been described in connection with a preferred embodiment, it is not intended to limit the scope of the invention to the particular form set forth, but on the contrary, it is intended to cover such alternatives, modifications, and equivalents as may be included within the spirit and scope of the invention as defined by the appended claims.

**Claims**

1.   Method for forming polymer comprising:

   (a) forming a miniemulsion comprising (i) an aqueous solution and (ii) a non-aqueous solution including at least a monomer capable to form a polymer and a so-called transfer agent, able to undergo to reversible addition-fragmentation transfer (RAFT) reaction, and

   (b) reacting the miniemulsion in the presence of an initiator for a time sufficient to form the polymer.

2.   Method according to claim 1, **characterised in that** the polymerisation according to the RAFT reaction is started by using at least one compound according to the following general formulas:

   X-CE-E-Y,

   Y-E-CE-E-Y,

   X-(CE-E-Y)$_2$ and/or X-(CE-E-Y)$_3$,

wherein the letter E stands for one of the following elements or groups: sulphur, oxygen, selenium or any other element in group 6 of the periodic system of the elements, which behave like sulphur or groups such as $CH_2$ or NH which are able to coordinate a double bond.

3.   Method according to claim 2, **characterised in that** the letter E stands for sulphur.

4.   Method according to one of the claims 2 or 3, **characterised in that** the X group of the general formula can be represented by an aliphatic group such as -methyl, - ethyl, etc., or by a substituted or unsubstituted aromatic group such as e.g. -phenyl, -pyrrole, -imidazole, etc.

5.   Method according to one of the claims 2 to 4, **characterised in that** the Y group of the compound according to the general formula can be represented by a monomeric unit, which is different or equal to the monomer or monomers respectively to be polymerised, by a generic aliphatic group comprising of nitrile (-CN) and/or keton groups (-CO-) and/or by a polymer chain or compound respectively.

6.   Method according to one of the claims 1 to 5, **characterised in that** the transfer agent or compound according to the general formula is able to undergo to a reversible addition-fragmentation transfer reaction (RAFT) in the non-aqueous solution and can be partitioned between the aqueous and the non-aqueous phases.

7.   Method according to one of the claims 1 to 6, **characterised in that** the monomer can be selected from all the monomers which can be polymerised or co-polymerised by free radical polymerisation.

8.   Method according to one of the claims 1 to 7, **characterised in that** the monomer to be polymerised is at least one of the following compounds:

   styrene and styrene derivatives, methylmethacrylate, ethylmethacrylate, n-butylmethacrylate, i-butylmethacrylate, benzylmethacrylate and other methacrylate derivatives, methylacrylate, ethylacrylate, n-butylacrylate, i-butylacrylate, benzylacrylate and other acrylate derivatives, vinyl acetate, acrylonitrile and acrylonitrile derivatives, acrylic acid and acrylic acid derivatives, ethylene oxide, butadiene, ethylene, propylene, n-bytylene, i-butylene, pentene and alchene derivatives and/or any mixture of the above mentioned compounds.

9. Method according to one of the claims 1 to 8, **characterised in that** the radical initiator can be added prior or after the formation of the miniemulsion, can be water soluble or oil soluble and can provide radicals by decomposition and/or by a redox process.

10. Method according to one of the claims 1 to 9, **characterised in that** the radical initiator is represented by at least one of the following compounds:

potassium persulfate, ammonium persulfate, sodium persulfate and persulfate derivatives, ethyl 2-bromoisobutyrate, a,a'-azoisobutyronitrile, 4-4'-azobis(4-cyanopentanoic acid), a,a'-azodiisobutyramidine dihydrochloride and diazo derivatives, benzyl peroxide and peroxide derivatives, redox initiators selected from the group of iron catalysts, sodium metabisulfate and sodium formaldehyde sulfonate.

11. Method according to one of the claims 1 to 10, **characterised in that** the non-aqueous phase includes one or more hydrophobic species.

12. Method according to one of the claims 1 to 11, **characterised in that** the non-aqueous phase comprises in addition a highly hydrophobic species selected the class of alkanes, such as e.g. hexadecane, or from the class of fatty alcohols, such as e.g. cetyl alcohol, or represented by a pre-made polymer.

13. Method according to one of the claims 1 to 12, **characterised in that** the aqueous phase includes one or more surfactants.

14. Method according to one of the claims 1 to 13, **characterised in that** the surfactant is including at least a compound from the group consisting of anionic, cationic or non-ionic surfactants, such as e.g. sodium dodecyl sulfate.

15. Method according to one of the claims 1 to 14, **characterised in that** the aqueous phase further comprises a chemical buffer, such as e.g. sodium bicarbonate.

16. Method according to one of the claims 1 to 15, **characterised in that** the miniemulsion is produced by the following steps:

- vigorously agitating the non-aqueous phase, comprising the monomer and the transfer agent or compound according to the general formula into the aqueous phase, comprising water and a surfactant, to produce homogeneously distributed non-aqueous or oily droplets,

- breaking by a high shear device the non-aqueous or oily droplets to create kinetically stable miniemulsion, non-aqueous or oily droplets in the size range lower than 500 nm of diameter, preferably between 20 and 500 nm of diameter, and

- purging the system with an inert gas so to eliminate the most of the oxygen present in the system.

17. Method according to claim 16, **characterised in that** the high shear to break the non-aqueous or oily droplets can be provided to the system by a mechanical device, such as e.g. a disperser, by ultrasonic vibrations, such as e.g. with a sonifier, or by pressurising the fluid into small channels, such as e.g. in a microfluidizer.

18. Method according to one of the claims 1 to 17, further comprising addition of monomer or monomers respectively, water and surfactant during the polymerisation (semi-batch process).

19. Method according to one of the claims 1 to 18, further comprising the addition of another monomer when the previous polymerisation step is finished so to produce a block copolymer.

20. Polymer obtainable by a method according to one of the claims 1 to 19.

21. Application of the method according to one of the claims 1 to 18 for the production of so-called block copolymers.

22. Application of the method according to one of the claims 1 to 19 for the production of very homogeneous polymers, e.g. being very homogeneous in terms of chain length and/or being very homogeneous in terms of chemical composition and/or being very homogeneous in terms of homogeneous chain length distribution.

23. Application of the method according to one of the claims 1 to 19 for the production of structured polymers, e.g. star or grafted polymers.

Figure 1

Figure 2

Figure 3

Figure 4

Figure 5

Figure 6

Figure 7

**European Patent Office**

## EUROPEAN SEARCH REPORT

Application Number

EP 00 12 4404

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 50436 A (UNISEARCH LTD) 12 November 1998 (1998-11-12) * claims 1-23 * | 1-23 | C08F2/22 C08F2/38 |

TECHNICAL FIELDS SEARCHED (Int.Cl.7)

C08F

The present search report has been drawn up for all claims

| Place of search | Date of completion of the search | Examiner |
|---|---|---|
| THE HAGUE | 1 March 2001 | Cauwenberg, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 12 4404

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2001

| Patent document cited in search report | Publication date | Patent family member(s) | | Publication date |
|---|---|---|---|---|
| WO 9850436 A | 12-11-1998 | AU | 7200698 A | 27-11-1998 |
| | | CN | 1262692 T | 09-08-2000 |
| | | EP | 0980392 A | 23-02-2000 |
| | | ZA | 9803881 A | 13-11-1998 |

EPO FORM P0459

For more details about this annex : see Official Journal of the European Patent Office, No. 12/82